(19) Europäisches Patentamt
European Patent Office
Office européen des brevets

(11) **EP 1 570 211 B1**

(12) **EUROPÄISCHE PATENTSCHRIFT**

(45) Veröffentlichungstag und Bekanntmachung des Hinweises auf die Patenterteilung:
**24.07.2013 Patentblatt 2013/30**

(21) Anmeldenummer: 03799526.3

(22) Anmeldetag: **01.12.2003**

(51) Int Cl.:
*F23C 9/00* *(2006.01)*

(86) Internationale Anmeldenummer:
**PCT/EP2003/050916**

(87) Internationale Veröffentlichungsnummer:
**WO 2004/053395 (24.06.2004 Gazette 2004/26)**

(54) **VERFAHREN UND VORRICHTUNG ZUR VERBRENNUNG EINES BRENNSTOFFES**

METHOD AND DEVICE FOR COMBUSTION OF A FUEL

PROCEDE ET DISPOSITIF DE COMBUSTION D UN COMBUSTIBLE

(84) Benannte Vertragsstaaten:
**AT BE BG CH CY CZ DE DK EE ES FI FR GB GR HU IE IT LI LU MC NL PT RO SE SI SK TR**

(30) Priorität: **11.12.2002 DE 10257704**

(43) Veröffentlichungstag der Anmeldung:
**07.09.2005 Patentblatt 2005/36**

(73) Patentinhaber: **Alstom Technology Ltd 5400 Baden (CH)**

(72) Erfinder:
• **CARREA, Elisabetta CH-8044 Zürich (CH)**
• **JANSOHN, Peter 79790 Küssaberg (DE)**

(56) Entgegenhaltungen:
EP-A- 0 766 045    EP-A- 1 156 281
EP-A- 1 193 450    EP-A1- 0 463 218
EP-A2- 0 698 764   US-A- 4 356 698
US-A- 5 339 635    US-A- 5 394 688
US-A- 5 412 938    US-A1- 2002 029 573

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Technisches Anwendungsgebiet

Die vorliegende Erfindung betrifft ein Verfahren zur Verbrennung eines Brennstoffs, insbesondere in der Brennkammer einer Gasturbogruppe, gemäss dem Oberbegriff des Anspruchs 1.

Stand der Technik

Bei der Energieerzeugung durch Verbrennung fossiler Brennstoffe werden zwei an sich gegensätzliche Ziele verfolgt. Zum einen soll der erreichbare Wirkungsgrad zur Brennstoff-Energie-Einsparung und Reduzierung der $CO_2$ Emissionen verringert werden. Zum anderen sollen die niedrigst möglichen Schadstoffemissionen, d.h. insbesondere NOx und CO, realisiert werden.

Eine Möglichkeit zur Verbesserung des Wirkungsgrads eines Verbrennungsprozesses basiert auf einer starken Vorerwärmung der Verbrennungsluft. Die Verbrennung findet dadurch bei höheren Flammentemperaturen statt und die Energie der heissen Verbrennungsgase wird schließlich in Rückgewinnungs- oder regenerativen Wärmetauschern wieder auf die Verbrennungsluft übertragen. Ein Nachteil der hohen Luftvorerwärmungstemperaturen sind jedoch höhere Spitzentemperaturen in der Flamme, die sich verheerend auf die thermischen Stickoxid-Bildung auswirken.

Wünning sowie Wünning et al haben in "Flammenlose Oxidation von Brennstoff mit hochvorgewärmter Luft", Chemical Ingenieur Tech. 63 (12), 1243-1245 (1991), sowie in "Flameless Oxidation to Reduce Thermal NO-Formation", Prog. Energy Combust. Sci. 23 (1997), ein neues Konzept der Verbrennung unter atmosphärischen Bedingungen, insbesondere also bei nicht oder nur gering erhöhtem Druck, vorgeschlagen. Dabei wird ein brennbares Gemisch aus Brennstoff und Oxidationsmittel, insbesondere Luft, auf Temperaturen oberhalb des SelbstentzündungsSchwellwertes gebracht. Diese Verbrennungstechnik ist als Verbrennung ohne Flammenerscheinung, milde Verbrennung, farblose Verbrennung oder Hochtemperaturverbrennung bekanntgeworden. Das grundlegende Konzept dieser neuen Technik besteht in der Erzeugung einer sehr verdünnten Reaktionsmischung aus Brennstoff und Oxidationsmittel sowie Rauchgas, das bei einer Temperatur über dem Selbstentzündungsschwellwert gehalten wird. Über eine Rauchgasrückführung wird zum einen die Reaktionsmischung verdünnt und zum anderen die notwendige Energie zur Vorerwärmung auf eine Temperatur oberhalb des Selbstentzündungsschwellwertes geliefert. Bei diesem Verbrennungsprozess wird die bisher in Brennern typischerweise auftretende Flammenfront durch eine nicht sichtbare Volumenflamme ersetzt, die annähernd gleichförmig über das Verbrennungsvolumen verteilt ist.

Problematisch bei der Realisation eines derartigen Verfahrens ist die Rückführung einer hinreichend grossen Menge Rauchgas. Typischerweise muss wenigstens der gleiche Volumenstrom, wie frisches Brennfluid-Gemisch herangeführt wird, an Rauchgas rezirkuliert werden. Gerade bei Gasturbinen-Anwendungen liegt dieses bei Temperaturen von beispielsweise 1400°C am Turbineneintritt vor. Die Rezirkulation ist auch deshalb nicht ohne weiteres zu bewerkstelligen, weil Brennersysteme üblicherweise einen nicht zu vernachlässigenden Druckverlust aufweisen, so dass der Totaldruck des zu rezirkulierenden Rauchgases unter dem des zugeführten Frischgases liegt. In der Summe ist die Rezirkulation hinreichend grosser Mengen an Rauchgas mit herkömmlichen Rezikulationtechniken, wenn überhaupt, dann nur mit grossem Aufwand möglich.

In der offengelegten Anmeldung EP 0463218 wird ein Verfahren zur flammenlosen Verbrennung von Brennstoff vorgestellt, das für einen Betrieb mit hoher Luftvorwärmung und/oder hoher Brennstoffvorwärmung geeignet ist. Dieses Verfahren arbeitet mit extrem hohen Abgasrückführraten von r ≥ 2, wobei die Abgasrückführrate **r** hier als das Verhältnis der Massenströme von rückgeführtem Abgas zu zugeführter Verbrennungsluft definiert ist. Hier stellen sich die vorgenannten Probleme um so mehr. Des weiteren offenbart diese Druckschrift eine zur Durchführung dieses Verfahrens geeignete Vorrichtung, die sich wesentlich durch die Anordnung der Düsen zur Einführung des Brennstoffs und der Verbrennungluft auszeichnet. So werden insbesondere Anordnungen von kranzförmig die Brennstoffeindüsung umschließenden Verbrennungslufteindüsungen in Kombination mit einer stromab versetzten Brennstoffeindüsung referiert. Das damit zu erreichende Wirkprinzip basiert darauf, die aus dem äußeren Düsenkranz austretende Verbrennungsluft zunächst durch einen brennstofffreien Bereich zu führen, in dem sich die Verbrennungsluftstrahlen aufgrund der Injektorwirkung mit den aus dem Verbrennungsraum angesaugten Abgasen vermischen, während die Durchmischung mit dem Brennstoff erst in einem festgelegten Abstand stromab der Düsenöffnungen erfolgt.

Die Druckschrift EP 0698764 offenbart einen Brenner zur flammenlosen Verbrennung eines Brenngas-Luft-Gemischs mit einer noch höheren Abgasrückführungsrate. Zu diesem Zweck wird das vorgemischte Brenngas-Luft-Gemisch in ein innerhalb der Brennkammer angeordnetes Mischrohr eingeblasen, wobei das rückgeführte Abgas durch das Brennstoff-Luft-Gemisch in das Mischrohr hineingerissen wird. Bereits innerhalb des Mischrohrs beginnt dabei die flammenlose Oxidation und hebt die Gastemperatur auf über 1300°C an. Die zusätzliche Anordnung des Mischrohrs innerhalb der Brennkammer erfordert aufwändige Maßnahmen konstruktiver und materialtechnischer Art, um dieses den herrschenden thermischen und chemischen Beanspruchungen anzupassen. Beim Einsatz im Gasturbinenbau birgt die Anordnung hohem Verschleiß ausgesetzter Komponenten innerhalb der Brennkammer stets die Gefahr in sich, dass sich Teile ablösen und die nachgeschaltete Turbine gefährden.

Darstellung der Erfindung

Der Erfindung liegt nunmehr die Aufgabe zugrunde, ein Verfahren der eingangs genannten Art anzugeben, welches die Probleme des Standes der Technik vermeidet. Insbesondere soll ein derartiges Verfahren so angegeben werden, dass hinreichend grosse Mengen an Rauchgas rezirkuliert werden können, um eine Temperaturerhöhung bis wenigstens zur Selbstzündung zu erreichen. Des Weiteren soll soviel Rauchgas rezirkuliert werden, dass das Brennfluid hinreichend stark verdünnt ist, damit die Stickoxid-Bildung gering bleibt. Als weitere Forderung ist das Verfahren derart anzugeben, dass die Ausbildung einer stabilen Flammenfront vermieden wird, und es tatsächlich zur möglichst reinen Volumenverbrennung kommt.

Die Aufgabe wird mit dem Verfahren gemäß unabhängigem Patentanspruch 1 gelöst. Vorteilhafte Ausgestaltungen des Verfahrens sind Gegenstand der abhängigen Ansprüche oder lassen sich aus der nachfolgenden Beschreibung und den Ausführungsbeispielen entnehmen.

Kern der Erfindung ist es also, ein Brennfluid, also einen Brennstoff oder ein brennbares Gemisch, als Brennfluid-Freistrahl unmittelbar in den Brennraum einzubringen, wobei die Fluidzufuhr zu den Düsen gepulst erfolgt.

Damit kann die Vermischung von Brennfluid und Rauchgas beeinflusst werden.

Bei Einsatz mehrerer nicht phasengleich pulsierender Strahlen wird eine verbesserte Vermischung bei einer verringerten Gefahr von Druckpulsationen der Verbrennung erreicht.

Dieser Effekt wird ebenso mit einer getakteten, intermittierenden oder oszillierenden Zufuhr von Brennfluid erzielt.

Bei einer hinreichend grossen Geschwindigkeit des Freistrahls reist dieser in bekannter Weise nach dem Strahlpumpenprinzip umgebendes Rauchgas mit sich. Wie unten erläutert, kann die Abhängigkeit des durch die so hervorgerufene strahlinduzierte brennrauminterne Rezirkulation rezirkulierten Massenstroms oder der Rezirkulationsrate über den Impulserhaltungssatz berechnet werden. Die in den Ansprüchen definierte Strömung des Freistrahls kann vom Fachmann daher anhand der dort angegebenen Kriterien sehr leicht berechnet werden. Es wird daher dem Fachmann eine klare und eindeutig und einfach nachzuarbeitende Lehre vermittelt, wie die Strömung des Freistrahls einzustellen sei, insbesondere, um ein bestimmtes Ergebnis zu erreichen. Es wird hierbei ohne weitere Erörterung vorausgesetzt, dass die Strömungsgeschwindigkeit des Freistrahls grösser als die Flammenfrontgeschwindigkeit des Brennfluides ist, wodurch die Ausbildung einer stabilen Flammenfront unterbunden wird.

Eine Vorrichtung zur Durchführung des Verfahrens besteht im einfachsten Falle aus einer Frontplatte eines Brennraumes, wobei eine Öffnung mit Mitteln zur Zufuhr von Fluid verbunden ist, und in dieser Öffnung eine Düse zur Erzeugung eines in den Brennraum eintretenden Brennfluid-Freistrahls angeordnet ist. Die Einstrittsdüsen sind hierbei als Hochgeschwindigkeitsdüsen ausgebildet, so dass mit der Eindüsung ein ausreichend hoher Impuls erzeugt wird, über den die Rezirkulation des Rauchgases und die entsprechende starke Verdünnung des Brennstoff-Oxidationsmittel-Gemisches, im Folgenden auch als Reaktionsgemisch oder Brennfluid bezeichnet, erreicht wird. Der zugrunde liegende Mechanismus beruht auf der Impulserhaltung.

Im Folgenden wird auch eine Luftzahl des Brennfluides referiert, was jedoch keinesfalls implizieren soll, dass als Oxidationsmittel zwangsweise Luft dienen soll. Ganz im Gegenteil ist es für den Fachmann ohne Weiteres nachvollziehbar und klar, dass die Angabe einer Luftzahl ohne weiteres auf Brenngemische mit anderen Oxidationsmitteln als Luft, beispielsweise mit reinem Sauerstoff, analog übertragen verwendet wird, wobei beispielsweise unter einem Brenngas-Sauerstoff-Gemisch mit der Luftzahl 1 ein stöchiometrisches, bei einer Luftzahl unter 1 ein entsprechend brennstoffreiches, unter einer Luftzahl grösser 1 ein brennstoffarmes Gemisch zu verstehen ist. Eine Luftzahl 2 bedeutet für eine Flamme mit Sauerstoff vollkommen analog zu einem Gemisch mit Luft das Doppelte der stöchiometrisch notwendigen Sauerstoffmenge. Diesen Analogieschluss wird der Fachmann unter Anwendung seines Wissens ohne weiteres ziehen. Eine Luftzahl $\lambda=0$ bedeutet reinen Brennstoff, eine Luftzahl "unendlich" reines Oxidationsmittel. Der Kehrwert der Luftzahl ist das Äquivalenzverhältnis $\Phi$.

Zur Durchführung des Verfahrens wird eine Vorrichtung verwendet, bei der eine zentrale Einstrittsdüse von einer konzentrischen Einstrittsdüse umgeben ist. Alternativ kann die zentrale Einstrittsdüse von mehreren, im Querschnitt vorzugsweise kleineren, weiteren Einstrittsdüsen umgeben sein. Die weiteren Einstrittsdüsen sind vorzugsweise in einer Reihe um die zentrale Einstrittsdüse herum angeordnet. Selbstverständlich sind auch Ausgestaltungen möglich, bei denen mehrere Reihen von kleineren Einstrittsdüsen ausgebildet sind. Der Abstand der umgebenden Einstrittsdüsen zueinander und zu der zentralen Einstrittsdüse ist so gewählt, dass sich die bei der Eindüsung gebildeten Strahlen nach einer bestimmten Distanz überlagern. Diese Überlagerung der eingedüsten Strahlen zu einem Gesamtstrahl kann auch durch geeignete Wahl der Eindüsungsrichtung oder der Divergenz der Eindüsungsstrahlen erreicht werden. Es müssen daher keineswegs zwangsläufig die Freistrahlen aller Düsen parallel orientiert sein; beispielsweise können dise sich auch an einem stromab gelegenen reellen oder einem stromauf gelegenen virtuellen Kreuzungspunkt kreuzen. Weiterhin kann anstatt einer einzelnen zentralen Eintrittsdüse auch eine zentrale Düsenkonfiguration angeordnet sein, welche ihrerseits eine Mehrzahl erster zentraler Eintrittsdüsen umfasst, welche innerhalb der Konfiguration zweiten und/oder weiteren Eintrittsdüsen angeordnet und von diesen umgeben sind.

Selbstverständlich lassen sich die erste und die zweite Ausführungsform auch kombinieren, so dass beispielsweise eine oder mehrere zentrale Eintrittsdüsen von einer konzentrischen Eintrittsdüse umgeben sein kann und diese Anordnung wiederum von mehreren weiteren Eintrittsdüsen umringt wird. Die Austrittsöffnungen der einzelnen Eintrittsdüsen müssen hierbei nicht notwendigerweise in einer Ebene liegen. Es ist vielmehr auch möglich, dass beispielsweise die Austrittsöffnung der zentralen Eintrittsdüse in Eindüsungsrichtung stromab der Eindüsungsöffnungen der verbleibenden Eintrittsdüsen liegt.

Beim Einsatz des vorliegenden Verfahrens im Brennersystem einer Gasturbinenanlage beträgt die Einlasstemperatur eines vorgemischten Brennfluidgemisches typischerweise zwischen 400°C und 500°C, liegt also unterhalb des Selbstentzündungsschwellwertes für ein Magergemisch mit beispielsweise λ = 2. Durch den Einsatz des vorgenannten Brennersystems und der Zuführung der beteiligten Reaktionsstoffe in einem Freistrahl mit ausreichend hoher Geschwindigkeit entsteht eine starke strahlinduzierte Rezirkulation des Rauchgases im Brennraum, wobei ein Teil des Rauchgases mit den austretenden Strahlen mitgerissen und die Reaktionsmischung dadurch stark verdünnt wird. Gleichzeitig wird durch strahlinduzierte brennrauminterne Rezirkulation die Temperatur des Reaktionsgemisches bis oberhalb des Selbstentzündungsschwellwertes erhöht, so dass sich das Reaktionsgemisch selbst entzündet und aufgrund der starken Verdünnung eine Verbrennung mit einer nicht sichtbaren Volumenflamme stattfindet. Dadurch beruht der Verbrennungsprozess nicht mehr auf der bei Gasturbinenanlagen bekannten drallstabilisierten Flamme eines Magergemisches oder in einer sonstwie stabilisierten Flammenfront, sondern auf der Ausbildung einer verdünnten selbststabilisierenden Volumenflamme. Dies führt zu einer sehr robusten und zuverlässigen Verbrennung mit einem gleichförmigen Temperaturprofil und dem Potential deutlich verringerter Schadstoffemissionen. Weiterhin weist diese Verbrennungstechnik das Potential für eine Unterbrechung des Rayleigh-Mechanismus auf, so dass Druckpulsationen, wie sie bei der bisher in Gasturbinenanlagen eingesetzten Magerverbrennung auftreten, unterdrückt werden. Durch eine geeignete Wahl oder Veränderung von Eindüsungsparametern ermöglicht das vorliegende Verfahren den stabilen Betrieb einer Gasturbinenanlage über einen weiten Lastbereich. Untersuchungen haben gezeigt, dass in Gasturbinenanlagen unter den dort vorherrschenden Hochdruckbedingungen bei brennstoffarmen Bedingungen, beispielsweise λ=2, bereits eine Rezirkulationsrate des Rauchgases im Bereich von 100% ausreicht, um den flammenlosen Verbrennungsmodus zu erzeugen. Die Rezirkulationsrate $K_V$ ist dabei definiert als das Verhältnis zwischen dem Massenstrom des rückgeführten Rauchgases und des Massenroms des der Brennkammer zugeführten frischen Brennfluides:

$$K_V = \frac{G_{IR} + G_{ER}}{F + Ox}$$

wobei:

$G_{IR}$     den Massenstrom des intern rückgeführten Rauchgases,
$G_{ER}$     den Massenstrom des extern rückgeführten Rauchgases,
F         den Massenstrom des Brennstoffs, und
Ox      den Massenstrom des Oxidationsmittels, üblicherweise Luft,

bezeichnen.

In einer bevorzugten Ausführungsform der Erfindung, welche insbesondere konstruktiv einfach zu bewerkstelligen ist, ist $G_{ER} < G_{IR}$ und insbesondere $G_{ER}=0$

Hohe Rezirkulationsraten des Rauchgases verursachen eine nicht vernachlässigbare $H_2O$-Anreicherung im Verbrennungssystem. Analog zur Wasser- oder Dampfeinspritzung in ein Verbrennungssystem hat die Anreicherung einen zusätzlichen positiven Einfluss auf die Unterdrückung der NOx-Bildung, da sie eine Wärmesenke bilden und die Prozesstemperatur kontrollierbar halten. Weiterhin wird durch die Dissoziation von $H_2O$ in der heissen Reaktionszone ein höherer Anteil an OH-Radikalen erwartet, der dadurch die $N_2O$-Zerstörun steigert.

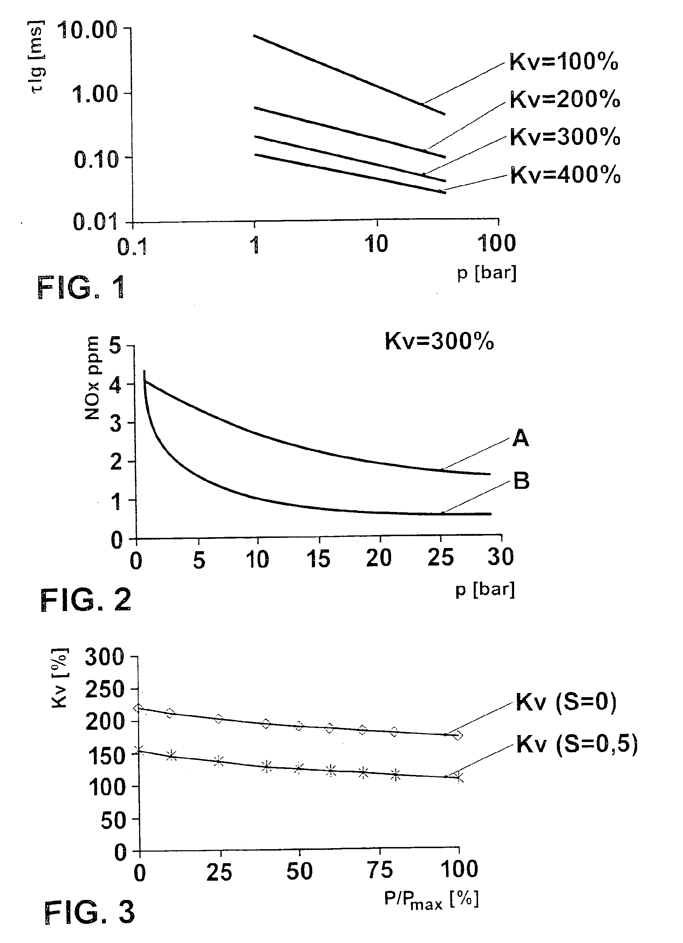

Modellberechnungen der Reaktionskinetik bei typischen Betriebsbedingungen in Gasturbinenanlagen demonstrieren das Verhalten des hier eingesetzten flammenlosen Verbrennungsprozesses unter derartigen Bedingungen. Es hat sich gezeigt, dass die Verzögerungszeiten für die Selbstzündung bei hoher adiabatischer Rauchgas-Rezirkulationsrate innerhalb der Bereiche liegen, die für Gasturbinenanlagen typischerweise benötigt werden. Figur 1 zeigt beispielhaft ein Diagramm als Ergebnis einer Berechnung für unterschiedliche Betriebsdrücke und Rezirkulationsraten. Weiterhin konnte gezeigt werden, dass die Ausbrennzeiten nicht vom Verdünnungsgrad des Reaktionsgemisches abhängen, da eine ausreichend hohe Flammentemperatur erreicht wird.

Die bei Einsatz des vorliegenden Verfahrens erreichbare Verringerung der NOx-Bildung, insbesondere bei hohem Druck, bei dem die Verbrennung mit einer großen Rauchgas-Rezirkulationsrate von 300% erfolgt, ist in Figur 2 im Vergleich zu einer aus dem Stand der Technik bekannten drallstabilisierten mageren Vormischverbrennung dargestellt. Aufgetragen sind die Stickoxidemissionen, bezogen auf 15% Restsauerstoff in trockenem Rauchgas. Die Vorteile des flammenlosen Verbrennungsmodus, Linie B, gegenüber einer herkömmlichen Vormischverbrennung, Linie A, sind unmittelbar erkennbar.

Es hat sich gezeigt, dass die Rauchgas-Rezirkulationsrate durch erfindungsgemäße strahlinduzierte interne Rauchgasrezirkulation bei verringerter thermischer Leistung der Feuerungseinrichtung, was im Allgemeinen mit weiterer Gemischabreicherung einhergeht, ansteigt. Dies führt dazu, dass die Selbstzündung auch bei diesen betriebsbedingt brennstoffärmeren Bedingungen aufrechterhalten wird. Figur 3 zeigt die Abhängigkeit der Rezirkulationsrate vom relativen Leistungsumsatz $P/P_{MAX}$ bei einer Eindüsung des Reaktionsgemisches ohne Drall , Drallzahl S=0, und mit Drall, Drallzahl S=0,5. Die Rauchgas-Rezirkulationsrate kann über das Impulserhaltungsgesetz berechnet werden gemäss

$$\frac{\dot{M}}{\dot{M}_0} = \frac{u_0}{u} = \sqrt{\frac{\rho}{\rho_0}} \cdot \frac{A}{A_0} = (1 + K_V)$$

Für kreisförmige Düsenstrahlen kann diese Gleichung folgendermaßen umgeschrieben werden:

für $x/d_0 < 8$:

$$K_V(\%) = \left[ 0.083 * \frac{x}{d_0} + 0.0128 * \left(\frac{x}{d_0}\right)^2 \right] \cdot \frac{\rho}{\rho_0}$$

für $x/d_0 > 8$:

$$K_V(\%) = 0.32 * \frac{x}{d_0} * \sqrt{\frac{\rho}{\rho_0}}$$

Hierbei sind:

M      der Gesamtmassenstrom;
$M_0$      der Massenstrom durch die Düse;
u      gemittelte Axialgeschwindigkeit;
$u_0$      gemittelte Axialgeschwindigkeit am Düsenaustritt;
$\rho$      Gasdichte des Rauchgases;
$\rho_0$      Gasdichte am Düsenaustritt;
A      Strahlquerschnitt;
$A_0$      Düsenquerschnitt;
x      axialer Abstand vom Düsenaustritt; und
$d_0$      Düsendurchmesser

Im Fall eines drallbehafteten Freistrahls erhöhen sich die Rezirkulationrate und die Rate des Geschwindigkeitsabfalls gemäss der Korrelation

$$K_V = \left( 0.32 \cdot \frac{x}{d_0} + K \cdot S \right) \cdot \sqrt{\frac{\rho}{\rho_0}}$$

wobei

S    die Drallzahl und
K    eine empirisch ermittelte Konstante

darstellen.

Es zeigt sich, dass die Rezirkulationsrate eine Funktion des Abstandes vom Düsenaustritt ist. Bei gegebener Geometrie lässt sich daher der Rauchgasanteil im reagierenden Brennfluid durch die Position der Selbstzündung beeinflussen. Andererseits beeinflusst die Rezirkulationsrate natürlich auch unmittelbar die Temperatur des entstehenden Gemisches. Es werden unten Verfahrensvarianten angegeben, mit denen bei an und für sich konstanten Strömungsbedingungen der Ort der Selbstzündung und damit die Rezirkulationsrate der Verbrennung variabel gestaltet wird.

Mit dem vorliegenden Verfahren lässt sich das chemische kinetische Potential der flammenlosen Verbrennung für eine Gasturbinenanlage voll ausschöpfen. Dies betrifft insbesondere die Erzielung von hohen Rezirkulationsraten bei geringen Druckverlusten, einem hohen Maß an Vermischung vor der Zündung, einer zuverlässigen Zündung, einer hohen Flammenstabilität, niedrigen Emissionen und geringen Verbrennungsoszillationen. Das erfindungsgemässe Verfahrens lässt sich in einer Gasturbinenanlage mit einer Rezirkulationsrate $K_v$ von 100% < $K_v$ < 200% sehr gut realisieren. Vorzugsweise wird das Verfahren mit einer Rezirkulationsrate von 100% < $K_v$ < 150% betrieben. Das Rauchgas wird bevorzugt zum überwiegenden Teil, ganz besonders vorteilhaft vollständig, durch die beschriebene strahlinduzierte brennrauminterne Rezirkulation dem Brennfluid-Freistrahl zugemischt. Damit kann bei einer Vorrichtung zur Durchführung des Verfahrens vollständig auf aufwändige konstruktive Mittel zur externen Rauchgasrezirkulation verzichtet werden.

In einer Ausgestaltung des vorliegenden Verfahrens wird den aus den Eintrittsdüsen austretenden Strahlen eine Drallkomponente aufgeprägt. Eine schwache Drallkomponente mit einer Drallzahl S unter 0,5 führt zu einer erhöhten Rauchgas-Rezirkulation ohne die Ausbildung einer lokalen Rezirkulationszone. Der Drall kann hierbei durch entsprechende mechanische Drallerzeuger in den Eintrittsdüsen oder deren Zuführungen erzeugt werden. Wird eine größere Drallkomponente mit einer Drallzahl über 0,5 erzeugt, so erhöht sich die Rezirkulationsrate nochmals, wobei sich dann jedoch eine lokale Rezirkulationszone ausbildet, die zu einem so genannten Vortex Breakdown und der Ausbildung einer Drall-stabilisierten Flamme mit einer stabilen Flammenfront führt, wie sie von drallstabilisierten Gasturbinen-Vormischbrennersystemen bekannt ist. Gemäss der Erfindung ist dies im nominalen Betriebszustand unerwünscht. Die Erzeugung eines Dralls größer als 0,5 wird daher bevorzugt eingesetzt, wenn aufgrund besonderer Betriebsbedingungen kein flammenloser Betrieb möglich ist. Ein Beispiel wäre der Start eines erfindungsgemässen Brenners, wenn noch kein heisses Rauchgas zur Rezirkulation und Temperaturerhöhung auf die Selbstzündungstemperatur bereitsteht. Hierfür ist dann ein variabler Drallerzeuger erforderlich, der je nach Einstellung und Anströmung unterschiedlich große Drallkomponenten im Freistrahl erzeugen kann. Im Normalbetrieb wird dieser Drallerzeuger dann zur Erzeugung eines Dralls unterhalb von S = 0,5, vorzugsweise von S < 0,4, eingesetzt. Unter Bedingungen, die zum Erlöschen der flammenlosen Verbrennung führen würden, wird der Drall erhöht, so dass sich eine drall-stabilisierte Flamme ausbildet. Hierbei können alle Brennfluid-Freistrahlen oder nur ein Teil davon verdrallt werden. In einer weiteren bevorzugten Ausführungsform werden die Freistrahlen benachbart angeordneter Düsen gegensinnig verdrallt.

Vorzugsweise wird den Eintrittsdüsen ein vorgemischtes Brennstoff-Oxidationsmittel-Gemisch als Brennfluid zugeführt. In einer bevorzugten Ausführungsform der Erfindung wird unterschiedlichen Düsen Brennfluid mit unterschiedlichen Luftzahlen zugeführt. Bevorzugt werden unterschiedliche Düsen, insbesondere wenigstens eine zentrale Düse und wenigstens eine den so gebildeten zentralen Bereich umgebende Düse, mit Brennfluid mit unterschiedlichen Luftzahlen beaufschlagt. Dies hat folgenden Hintergrund: Wie oben ersichtlich, ist bei festgelegten Zuströmbedingungen die Rezirkulationsrate eine Funktion des Abstandes vom Düsenaustritt. Mit einer Beeinflussung des Ortes der Selbstzündung, welche bei sonst konstanten Bedingungen wiederum über die Luftzahl erfolgen kann, kann somit die Menge des rezirkulierten Rauchgases am Ort der Zündung beeinflusst werden, selbst wenn die mittlere Luftzahl über einen Brenner konstant bleibt, wie nachfolgend beschrieben: In einer ersten Variante wird in einem zentralen Bereich ein brennstoffreiches Gemisch eingebracht, mit einer Luftzahl, die kleiner ist als die Brenner-Gesamtluftzahl, und die bevorzugt jedenfalls unter 1 liegt. Dieses Gemisch ist vergleichsweise zündwillig. Um diesen zentralen Bereich wird durch weitere Düsen - oder eine im Wesentlichen konzentrische ringförmige Düse - ein Mantel aus einem brennstoffarmen Gemisch mit einer Luftzahl grösser 1 gelegt, welches weniger zündwillig ist. Die Einmischung und Temperaturerhöhung erfolgt dann zuerst im brennstoffarmen Bereich, während der zündwillige brennstoffreiche Bereich hiervon isoliert ist. Der Ort der Zündung wird also weiter stromab verschoben, als dies für ein insgesamt homogenes Gemisch mit einer mittleren Luftzahl der Fall wäre. Damit erfolgt die Zündung erst, wenn bereits viel Rauchgas dem Brennfluid zugemischt ist. Daraus resultieren unter anderem geringere Spitzentemperaturen der Verbrennung. Ein solcher Betriebsmodus eignet sich besonders gut zum Betrieb bei hohen und höchsten Wärmeumsätzen und hohen Zuströmtemperaturen des Brennfluides, wie dies beispielsweise beim Vollastbetrieb einer Gasturbogruppe der Fall ist. In einer weiteren Verfahrensvariante wird der äussere Bereich mit einem vergleichsweise brennstoffreichen Gemisch betrieben, dessen Luftzahl kleiner als die mittlere Luftzahl ist, und die bevorzugt kleiner als 1 ist. Zum Ausgleich wird der zentrale Bereich mit brennstoffarmem Gemisch oder reinem Oxidationsmittel versorgt. In der Folge wird dem zündwilligen Gemisch unmittelbar heisses Rauchgas zugemischt, und die Zündung erfolgt weiter stromauf, als dies mit einem Gemisch mit einer brennergemittelten Luftzahl der Fall wäre. Eine solche Betriebsweise ist beispielsweise beim Zünden und bei geringen brennergemittelten Luftzahlen, entsprechend niedrigen Flammentemperaturen und geringen Temperaturen des Rauchgases, sehr von Vorteil, weil die Zündung der Volumenflamme unterstützt wird. Dies fördert die Stabilität der Verbrennung. In einer weiteren Verfahrensvariante wird der zentrale Bereich mit brennstoffarmem Gemisch betrieben, beispielsweise mit einer Luftzahl von zwei, während der umgebende Bereich mit reinem Oxidationsmittel oder einem Gemisch mit einer sehr hohen Luftzahl, von beispielsweise 5 und darüber, beaufschlagt wird. Dieses Gemisch ist an sich schon gar nicht mehr zündfähig. Auf diese Weise wird in einem insgesamt brennstoffarmen Betrieb ein Stöchiometrie-Gradient erzeugt, der es erlaubt, den Ort der Zündung einzustellen. Dies ist unten im Zusammenhang mit einem Ausführungsbeispiel der Erfindung erörtert. Eine weitere Möglichkeit, auf den zugrundeliegenden Prozess einzuwirken, ist, den Massenstrom zu einzelnen Düsen oder Gruppen von Düsen zu variieren, und damit den Austrittsimpuls einzustellen; vorstellbar ist es beispielsweise auch, wenn eine oder mehrere zentrale Düsen von einer Mehrzahl äusserer Düsen umgeben ist, die Brennfluidzufuhr zu einzelnen dieser Düsen selektiv abzusperren, um bei gleichem Gruppenmassenstrom den Eintrittsimpuls der Fluid-Freistrahlen zu variieren.

Eine Vorrichtung zur Durchführung des Verfahrens weist daher bevorzugt jeweils getrennte Fluidzuführungen auf zu: einer oder mehreren zentralen ersten Eintrittsdüsen; gegebenenfalls einer zweiten die erste Düse oder die ersten Düsen konzentrisch umfassende Düse; gegebenenfalls einer Mehrzahl von im Wesentlichen konzentrisch um die Zentralkonfiguration angeordneten weiteren Eintrittsdüsen. In einer bevorzugten Ausführungsform ist jeder Fluidzuführung eine Mischvorrichtung zur Vermischung von Brennstoff und Oxidationsmittel zu jeweils einem homogenen Brennfluid zugeordnet. Auf diese Weise ist die Luftzahl des der Zentralkonfiguration sowie gegebenenfalls der umgebenden Düsen zugeführten Brennfluides unabhängig voneinander einstellbar. In einer weiteren Ausführungsform ist in jeder der Brennfluidzuführungen ein Stellorgan angeordnet, mit dem der jeweilige Massenstrom unabhängig einstellbar ist. Weiterhin können in den Zuleitungen einzelner Düsen Drossel- oder Absperrorgane angeordnet sein, derart, dass diese selektiv abgesperrt werden können; ein bestimmter Fluidmassenstrom kann somit auf unterschiedliche Düsen aufgeteilt werden, womit der Impuls der Fluid-Freistrahlen und damit die Rezirkulationsrate variiert werden kann.

Die Wahl der geometrischen Anordnung und Ausgestaltung der einzelnen Eintrittsdüsen des Brennersystems sowie der Betriebsweise gemäß den vorangehend erläuterten oder in den Ausführungsbeispielen dargestellten Ausführungsvarianten wird jeweils in Abhängigkeit von der Geometrie der Brennkammer und der erforderlichen Verweilzeit in der Brennkammer gewählt, um eine komplette Verbrennung über den größtmöglichen Betriebs- bzw. Lastbereich zu erzielen. Wesentliche Ziele hierbei sind die Ausweitung des Flammenvolumens sowie die Minimierung der Verweilzeit und der Gefahr von Druckpulsationen.

Erfindungsgemäss kann ein Verfahren der eingangs genannten Art also aufgrund der Nutzung der strahlinduzierten brennrauminternen Rauchgasrezirkulation ohne konstruktiv aufwändige Rauchgasrückführvorrichtungen betrieben werden, und ermöglicht eine hervorragend flexible Anpassung an einen weiten Betriebsbereich.


Kurze Beschreibung der Zeichnungen

Das erfindungsgemäße Verfahren sowie eine zur Durchführung besonders geeignete Vorrichtung werden nachfolgend anhand von Ausführungsbeispielen in Verbindung mit der Zeichnung erläutert. Es zeigen:

Figuren 1 und 2 berechnete Verzögerungszeiten der Selbstzündung und NOx-Emissionen bei unterschiedlichen Betriebsdrücken und Rezirkulationsraten, unter Zugrundelegung einer adiabatischen Flammentemperatur von 1800 K;

Figur 3 berechnete Rauchgas-Rezirkulationsraten in Abhängigkeit von der relativen Brennerbelastung mit und ohne zusätzliche Drallerzeugung;

Figur 4 eine schematisierte Gasturbogruppe mit einem Brennersystem mit Rauchgas-Rezirkulation zur Durchführung der vorliegenden Erfindung;

Figur 5 eine erste beispielhafte Anordnung von Eintrittsdüsen;

Figur 6 eine zweite beispielhafte Anordnung von Eintrittsdüsen;

Figur 7 eine dritte beispielhafte Anordnung von Eintrittsdüsen;

Figur 8 ein Beispiel für einen Drallerzeuger für die Verwendung in den Eintrittsdüsen einer zur Durchführung der Erfindung geeigneten Vorrichtung;

Figuren 9 bis 12, sowie 14 weitere beispielhafte Anordnungen von Eintrittsdüsen;

Figur 13 eine Seitenansicht einer Vorrichtung zur Durchführung des erfindungsgemäßen Verfahrens;

Figur 15 ein Konzentrationsprofil eines Brennstoff-Oxidationsmittel-Gemisches innerhalb der Brennkammer unter der Annahme eines bestimmten erfindungsgemässen Betriebsmodus; und

Figur 16 einen beispielhaften Temperaturverlauf über die Längserstreckung einer erfindungsgemäss betriebenen Brennkammer.

Wege zur Ausführung der Erfindung

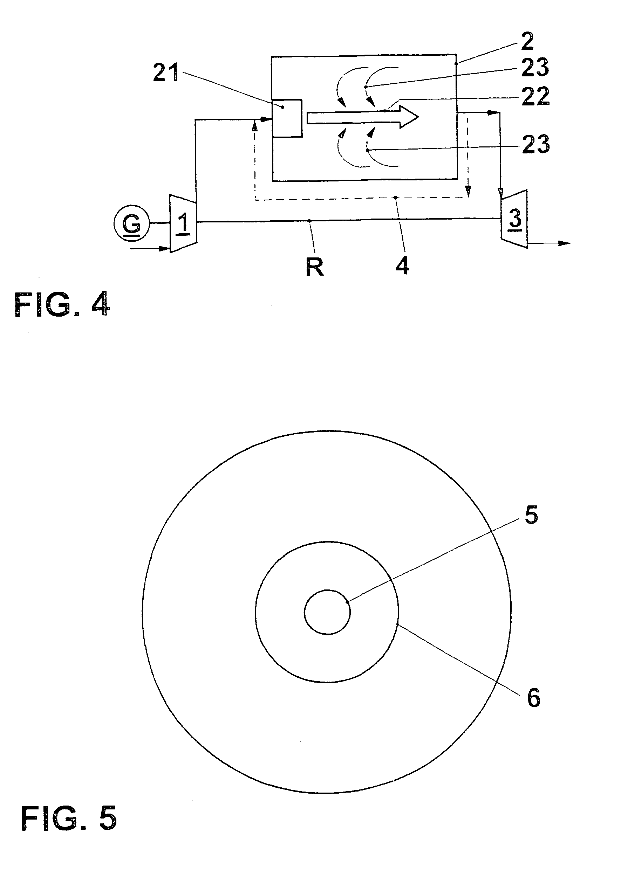

Figur 4 zeigt schematisch eine Gasturbogruppe. Ein Generator G, ein Verdichter 1, und eine Turbine 3 sind auf einer gemeinsamen Welle R angeordnet. Der Verdichter 1 komprimiert Umgebungsluft, und fördert diese in eine Brennkammer 2. Dort wird in der Luft ein Brennstoff verbrannt. Die dabei entstehenden heissen und gespannten Rauchgase treiben die Turbine 3. Die Turbine 3 treibt ihrerseits den Verdichter 1 und den Generator G. Die Verbrennung in der Brennkammer 2 soll als selbstzündende Volumenverbrennung der oben beschriebenen Art stattfinden. Die Temperaturerhöhung eines im Brenner 21 bereitgestellten Brennstoff-Luft-Gemisches auf Selbstzündungstemperatur soll durch die Zumischung von aus der Brennkammer rezirkuliertem heissem Rauchgas erfolgen. Eine Möglichkeit hierzu ist eine externe Rauchgaszirkulation entlang dem mit 4 gekennzeichneten Pfad. Wie oben dargelegt, ist diese durchaus nicht unproblematisch zu realisieren. Erfindungsgemäss wird dem Brennfluid daher das Rauchgas über eine strahlinduzierte brennrauminterne Rezirkulation beigemischt. Dazu ist der Brenner 21 so ausgelegt, dass ein Brennfluid-Freistrahl 22 mit hoher Geschwindigkeit in den Brennraum 2 einströmt, und dort im Grunde nach dem Strahlpumpenprinzip Rauchgas 23 mit sich reisst. Weiterhin werden einzelne oder alle der zugeführten Strahlen gepulst eingedüst, beispielsweise durch Verwendung eines Resonanzrohres.

In einer Brennkammer einer Gasturbinenanlage werden mehrere Brenner abhängig vom Energiebedarf eingesetzt. Eines der bekannten Probleme in Gasturbinenanlagen besteht in Verbrennungsdruckschwankungen, die durch thermoakustische Oszillationen hervorgerufen werden und zu einer hohen mechanischen Beanspruchung der Anlage führen. Durch eine gepulste Eindüsung können derartige Oszillationen vermindert oder unterdrückt werden. Die pulsierenden Strahlen können auch zur Verbesserung der Rezirkulationsrate und zur Kontrolle von Verbrennungsinstabilitäten eingesetzt werden, die im Zusammenhang mit Druckpulsationen stehen.

In einer Ausgestaltung können einzelne Strahlen dabei außer Phase in den Brennraum eingedüst werden, um den bekannten Rayleigh-Mechanismus zu stören und dadurch selbstinduzierte Verbrennungspulsationen im System zu unterdrücken.

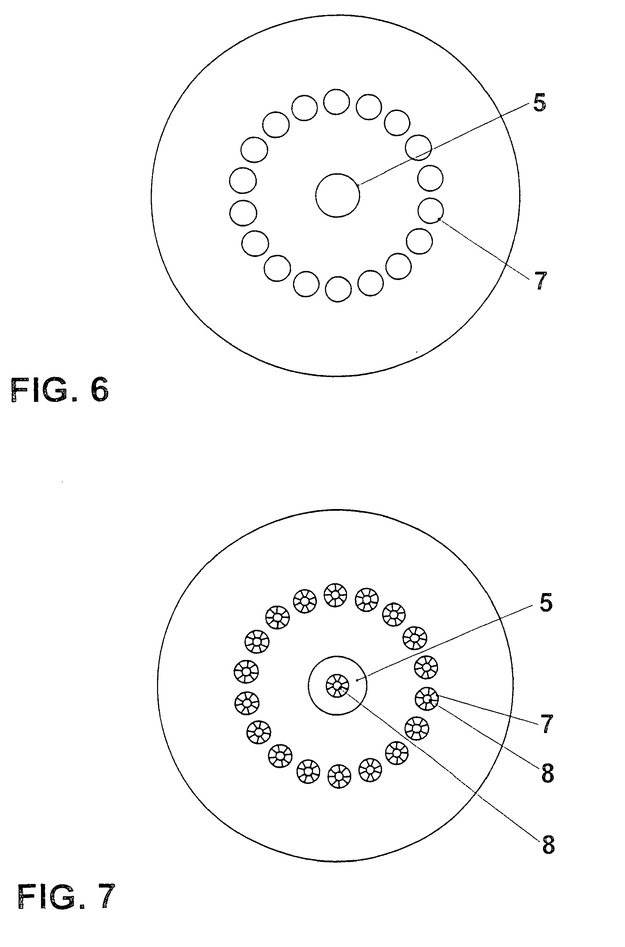

Die Figuren 5 und 6 zeigen zwei Ausgestaltungen einer Düsenanordnung einer zur Durchführung des Verfahrens geeigneten Vorrichtung. Bei der Ausgestaltung gemäss Figur 5 wird eine zentrale Düse 5 von einer konzentrischen Düse 6 umschlossen. Bevorzugt können beide unabhängig voneinander mit Brennfluid beaufschlagt werden. Figur 6 zeigt eine Ausgestaltung, bei der die zentrale Düse 5 von einer Reihe von kleineren Düsen 7 umgeben ist. Selbstverständlich können Düsen 7 auch ergänzend bei einer Anordnung gemäss Figur 5 verwendet werden. Die Strahlen der jeweils umgebenden Düsen vermischen sich nach einer gewissen Distanz mit dem zentral austretenden Strahl. Durch den Austrittsimpuls der mit hoher Geschwindigkeit austretenden Strahlen wird eine starke Rezirkulation von Rauchgas im Brennraum herbeigeführt, das von den austretenden Strahlen mitgerissen wird und auf diese Weise das Reaktionsgemisch stark verdünnt. Bei den beiden dargestellten Eintrittsdüsen-Konfigurationen muss gewährleistet werden, dass das erforderliche Maß an Verdünnung erreicht wird, bevor die Selbstzündung stattfindet, um die Bildung stark lokalisierter heisser Zonen, so genannter Hot-Spots, zu vermeiden. Eine unerwünschte Zündung kann hierbei an einer Grenzfläche zwischen dem Brennstoff und dem Oxidationsmittel unter stöchiometrischen oder brennstoffreichen Bedingungen stattfinden, falls die Vermischung mit dem rückgeführten Rauchgas nicht stark genug bzw. tief genug erfolgt, um die stöchiometrischen Grenzflächen zu verdünnen. Die Bildung so genannter Hot-Spots hat wiederum einen stark negativen Einfluss auf die NOx-Emissionen. Daher wird in einer bevorzugten Ausführungsform des Verfahrens über die zentrale Düse 5 ein vorgemischtes brennstoffreiches Brennstoff-Luft-Gemisch mit einer Luftzahl von $\lambda < 1$ zugeführt, während bei der Ausgestaltung der Fig. 5 über die Düsen 6 oder 7 reine Luft oder eine brennstoffarme Mischung mit $\lambda \gg 1$, insbesondere $\lambda > 3$, zugeführt wird. Bei einer derartigen Betriebsweise wird mit dem äußeren, koaxialen Strahl keine frühzeitige Selbstzündung während der Vermischung mit dem rückgeführten Rauchgas ausgelöst, da dies die magere Stöchiometrie dieses Strahls vor der Vermischung mit dem zentralen Strahl nicht zulässt. Bei dieser Betriebsweise kann eine bessere Prozesskontrolle erreicht werden, wobei die Gefahr der Bildung von Hot-Spots sowie einer lokalen Überhitzung vermindert wird. In einer weiteren Ausführungsform der Erfindung mit der Düsenkonfiguration gemäss Figuren 5 und 6 wird eine brennstoffarme Mischung mit $\lambda \gg 1$ eines Brennstoff-Luft-Gemisches über die zentrale Düse 5 zugeführt und eine brennstoffreiche Mischung mit $\lambda < 1$ durch die Düsen 6 oder 7. In diesem Falle wird eine schnellere Selbstzündung erwartet, da fettere Gemische schneller zünden als magere Gemische. Der aussen liegende Strahl mit dem fetten Gemisch reisst hierbei das umgebende Rauchgas mit, erhitzt sich dadurch schnell und zündet leichter als eine magere Mischung. Eine derartige Betriebsweise bietet sich daher für das Starten des Brenners an, da der äußere ringförmige Strahl die Zündung erleichtert.

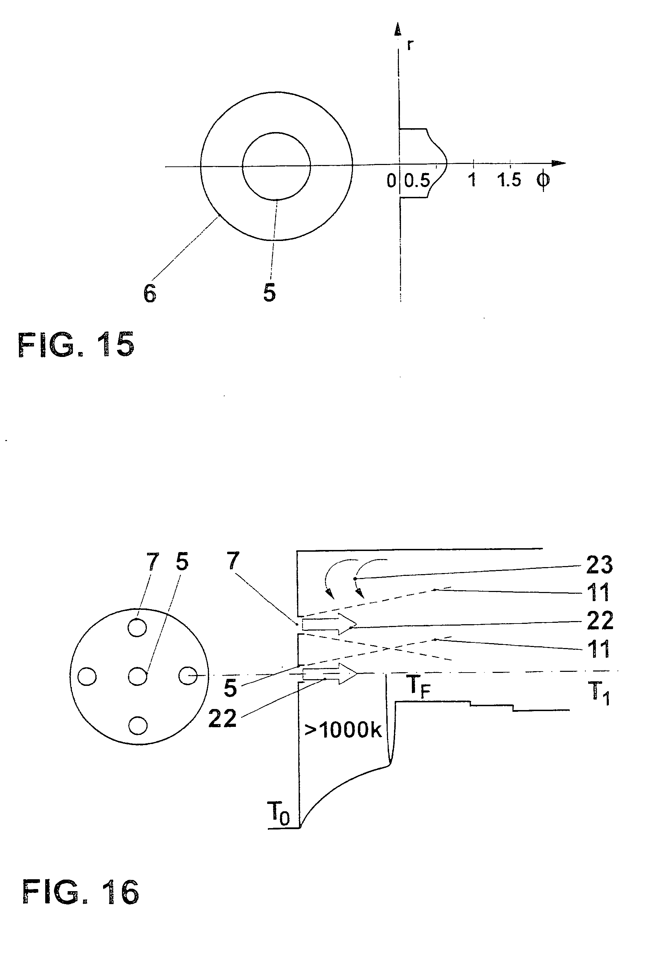

In einer weiteren Ausgestaltung des vorliegenden Verfahrens wird über die zentrale Eintrittsdüse 5 ein brennstoffarmes Brennstoff-Luft-Gemisch mit beispielsweise $\lambda = 2$ zugeführt, während über die umgebende Düsen 6 oder 7 reine Luft oder extrem verdünntes Gemisch eingedüst wird, um das umgebende Rauchgas mitzureissen. Der Mantelstrom dient dabei gleichzeitig zur Kontrolle der Zündung, da sie eine Barriere zum zündfähigen im inneren Strahl vorliegenden Gemisch bildet. Bei einer derartigen Betriebsweise stellt sich ein Brennfluid-Freistrahl mit einer über den Strahlquerschnitt variierenden Konzentration ein, bei dem am Rand eine geringere Brennstoffkonzentration vorliegt als im Zentrum, so, dass die äußeren Bereiche die Selbstzündung verzögern und sich somit eine höhere Rezirkulationsrate des Rauchgases bis zum Ort der Selbstzündung erreichen lässt. Das Konzentrationsprofil muss dabei eine magerere Stöchiometrie am Rand aufweisen als die mittlere Stöchiometrie des Gesamtstrahls. Auf diese Weise vermischt sich der Anteil mit der magereren Mischung über eine grössere Lauflänge des Freistrahls mit dem Rauchgas, da eine höhere Energie für die Zündung erforderlich ist als für die mittlere Stöchiometrie. Mit einer derartigen Betriebsweise lässt sich damit der Zündzeitpunkt verschieben und somit die Rezirkulationsrate sowie der Verdünnungsgrad steuern. Das Konzentrationsprofil kann dabei in Abhängigkeit von der Last so verändert werden, dass sich über den gesamten Verbrennungsprozess bei jeder Last eine optimale Verbrennung erzielen lässt. Figur 15 zeigt ein Beispiel eines Konzentrationsprofils über dem Querschnittdes Brennfluidstrahls. Im linken Teil der Figur sind dabei die zentrale Düse 5 sowie die konzentrische Düse 6 dargestellt, im rechten Teil der Figur das Konzentrationsprofil in Form des Äquivalenzverhältnisses $\Phi = 1/\lambda$, wobei über die umgebende Düse 6 als Schirmstrom reine Luft oder ein inertes Gas zugeführt wird. In dieser Darstellung ist aus Gründen der Darstellbarkeit anstelle der Luftzahl deren Reziprokwert aufgetragen um den darzustellenden Wertebereich endlich zu halten. Der Schirmstrom kann auch über eine Mehrzahl von Düsen 7 eingebracht werden. Figur 16 zeigt einen typischen Temperaturverlauf als Funktion des Abstandes vom Düsenaustritt bei einer solchen Betriebsweise.

Durch Düsen 5 und 7 strömen die Fluid-Freistrahlen 22 mit der Temperatur $T_0$ in den Brennraum ein. Diese reissen Rauchgas 23 mit, welches das Reaktionsgemisch verdünnt und aufheizt. Die gestrichelten Linien geben schematisch das Strahlprofil der Freistrahlen 22 wieder, die aus den Düsen 5 und 7 austreten. Die Rauchgas-Rezirkulation sowie das Mitreissen des Rauchgases wird hauptsächlich durch die äußeren Strahlen der Düsen 7 erreicht, so dass sich hauptsächlich diese Strahlen durch das Rauchgas aufheizen. An dem Punkt, an dem sich die aufgeheizte Luft der äußeren Strahlen mit dem über die zentrale Düse 5 zugeführten Strahl des Brennstoff-Luft-Gemisches treffen, findet eine Selbstzündung des Reaktionsgemisches statt, die zu einer starken Temperaturerhöhung auf die Flammentemperatut $T_F$ führt. Das Reaktionsgemisch brennt dann in einer stark verdünnten Umgebung und kühlt sich durch weitere Vermischung mit Rauchgas bis zum Austritt aus der Brennkammer wieder auf eine Temperatur $T_1$ ab.

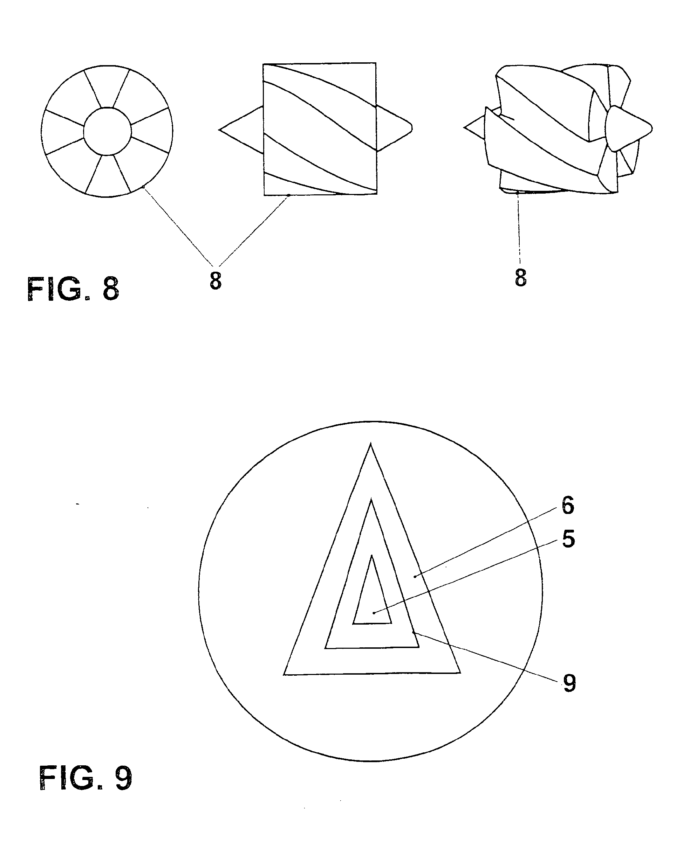

Bei einer Ausführungsform mit einzelnen umgebenden Strahlen beispielsweise gemäss Figur 6 ist der Einfluss der äußeren Strahlen auf die Rezikulationsrate geringer als dies die Summe des jeweiligen Einflusses jedes Einzelstrahls auf die Rückführungsrate erwarten lässt. Dies liegt daran, dass sich die Strahlen ab einer bestimmten Distanz vom Düsenausgang zu einem Gesamtstrahl vermischen und damit ihre Einzelstrahlcharakteristik verlieren. Mit einer derartigen Anordnung kann eine Rezirkulationsrate von 130% erreicht werden, bevor sich die äußeren Strahlen mit dem zentralen Strahl treffen. Es hat sich gezeigt, dass in einem Hochdrucksystem, wie es in der Regel bei Gasturbinenanwendungen vorliegt, eine Rezirkulationsrate von 100% ausreichend ist, um eine sichere Selbstzündung einer Volumenflamme zu gewährleisten. Beste Ergebnisse lassen sich unter diesen Bedingungen mit einer Rezirkulationsrate $K_V$ von 100% < $K_V$ < 200%, vorzugsweise mit 100% < $K_V$ < 150%, erzielen. Um die Rezirkulationsrate bei einer derartigen Anordnung über die genannten 130% zu erhöhen, wird bevorzugt eine Vorrichtung mit zusätzlichen Drallerzeugern 8 verwendet, wie sie unten im Zusammenhang mit den Figuren 7 und 8 erläutert ist. Den äußeren Strahlen kann hierbei ein Drall aufgeprägt werden, der sowohl zu gegensinnigen als auch zu gleichsinnigen Drallkomponenten in benachbarten Strahlen führen kann. Durch diese zusätzliche Drallerzeugung wird ein höherer Verdünnungsgrad und eine verbesserte Mischung zwischen dem frischen zugeführten Reaktionsgemisch und dem Rauchgas vor dem Zeitpunkt der Zündung und somit eine bessere Prozesskontrolle und ein verbesserter Betrieb erreicht.

Figur 7 zeigt ein weiteres Beispiel einer Düsenkonfiguration für den Einsatz in einer Vorrichtung zur Durchführung eines erfindungsgemässen Verfahrens. Innerhalb der Eintrittsdüsen 5 und 7 sind Drallerzeuger 8 angeordnet, um die Luft bzw. das Brennstoff-Luft-Gemisch mit einem Drall in den Brennraum einzudüsen. Ein Beispiel für einen geeigneten Drallerzeuger ist in Figur 8 in drei unterschiedlichen Perspektiven dargestellt. Neben der Verwendung eines derartigen schraubenförmigen Drallerzeugers lassen sich selbstverständlich auch andere bekannte Systeme, wie beispielsweise Leitbleche, zur Drallerzeugung einsetzen. Sowohl die zentrale Düse 5 als auch die koaxiale Düse 6 oder die umgebenden Düsen 7 können mit Drallerzeugern versehen werden. Selbstverständlich kann auch nur eine der Düsen oder Düsengruppen mit einem Drallerzeuger ausgestattet werden. Durch den Einsatz des Drallerzeugers wird die Rezirkulationsrate erhöht und die Vermischung intensiviert, wie dies bereits im Zusammenhang mit Figur 3 erläutert wurde. Weiterhin lässt sich der Vermischungsgrad zwischen zwei benachbarten Strahlen dadurch verbessern, dass beide mit einem gegensinnigen Drall beaufschlagt werden. Der Drall führt zu einem breiteren Austrittswinkel des Strahls mit einem stärkeren Geschwindigkeitsabfall und verbessert so das Mitreissen des umgebenden Rauchgases in den einzelnen Strahlen. Die aufgeprägte Drallzahl wird bevorzugt kleiner als S = 0,5, vorzugsweise kleiner als S = 0,4, gewählt, um den vorliegenden flammenlosen Verbrennungsbetrieb zu ermöglichen. Eine Drallzahl oberhalb von S = 0,5 oder 0,6 würde zu einem Vortex-Breakdown, also einer drallinduzierten Rückströmzone führen, so dass sich eine von Gasturbinen-Vormischbrennern her bekannte Drall-stabilisierte sichtbare Flamme ausbilden würde. In einer bevorzugten Ausgestaltung werden daher bewegliche blockartige Drallerzeuger mit veränderbarem Drall eingesetzt. Bei dieser Betriebsweise werden diese Drallerzeuger zur Erzeugung eines Dralls mit S < 0,5, vorzugsweise mit S < 0,4, eingestellt. Ist aufgrund einer Störung oder stark veränderter Betriebsbedingungen der flammenlose Brennerbetrieb nicht möglich, beispielsweise falls nicht genügend heisses Rauchgas oder eine zu geringe Temperatur des Rauchgases zur Verfügung steht, so werden die Drallerzeuger verstellt, um den Drall auf S > 0,5 oder S > 0,6 zu erhöhen, so dass sich eine sichtbare Flamme einstellt, welche sozusagen als Pilotflamme wirkt.

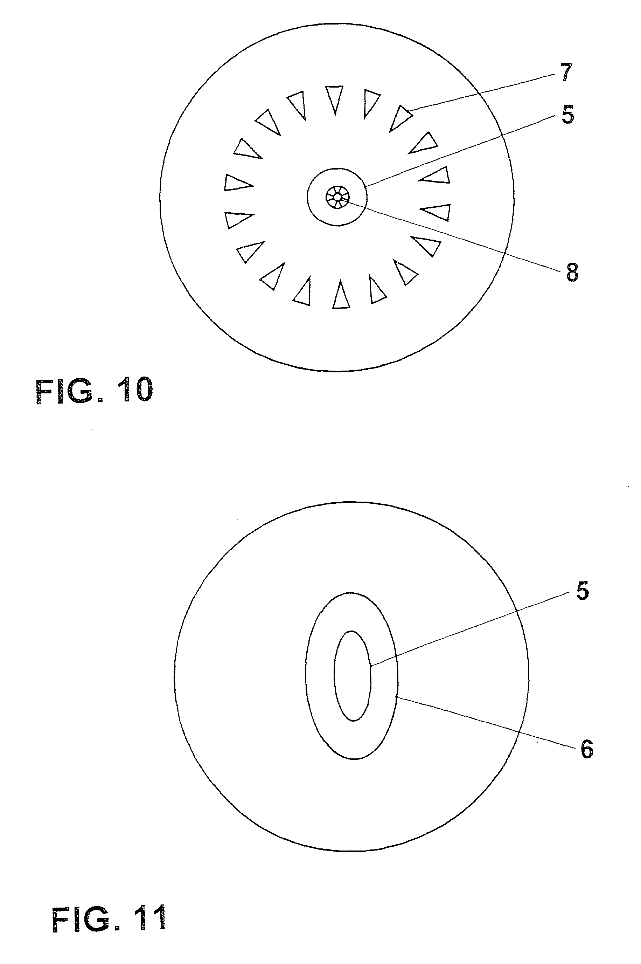

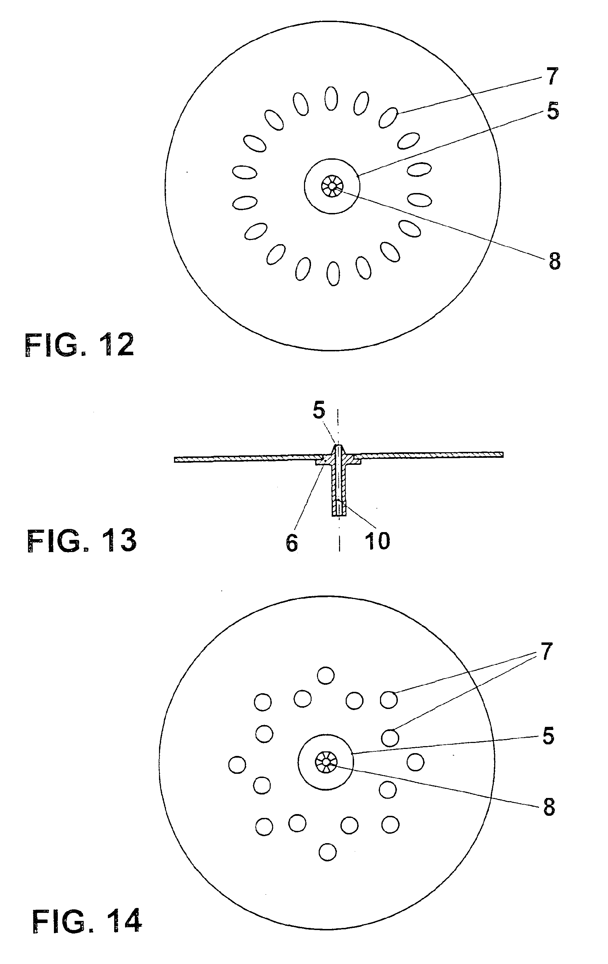

Neben kreisrunden Düsenöffnungen lassen sich selbstverständlich auch andere geometrische Formen der Düsenöffnungen realisieren, die zu entsprechenden nicht kreisförmigen Strahlquerschnitten führen. Durch eine derartige Wahl einer anderen Geometrie der Düsenöffnungen, wie sie beispielsweise in den Figuren 9 bis 12 dargestellt sind, lassen sich die Massenströme sowie die Verbrennung je nach den konkreten Gegebenheiten besser kontrollieren. Der Einsatz nicht kreisförmiger Strahlen kann hierbei zu einer verbesserten groß- oder kleinskaligen Mischung führen und die Verbrennung verbessern, beispielsweise durch Verbessern der Verbrennungseffizienz, der Reduzierung von Verbrennungsinstabilitäten und unerwünschten Emissionen. Im Querschnitt nicht kreisförmige Strahlen haben aufgrund von Vortex-Selbstinduktionseffekten signifikant größere Rezirkulationsraten als kreisförmige Strahlen. In den Figuren 9 und 10 ist hierbei speziell eine Ausgestaltung mit Düsenöffnungen mit dreieckiger Geometrie gezeigt. In der Ausgestaltung gemäss Figur 9 kann sich hierbei die äußere Düse 6 direkt an die innere Düse 5 anschließen oder über ein Distanzstück 9 von dieser getrennt sein. Die Verbindung kann auch unterbrochen ausgeführt sein. Die Richtung dieser dreieckigen Düsen kann ebenfalls variiert werden, um die beste Konfiguration bei den gegebenen Bedingungen für die Flusskontrolle und die Rauchgas-Rückführung zu erreichen. Auch hier kann sowohl eine Zuführung reinen Brennstoffes über die zentrale Düse 5 oder eines teilweise oder vollkommen vorgemischten Brennstoffes erfolgen, wie dies bereits bei den anderen Ausführungsformen erläutert wurde. Die Figuren 11 und 12 zeigen eine andere mögliche Ausführungsform, bei der wenigstens einige der Düsen elliptische Geometrie aufweisen. Selbstverständlich lassen sich auch andere Düsengeometrien, wie beispielsweise rechteckige Düsen einsetzen.

Fig. 13 zeigt schließlich beispielhaft auch eine Ausgestaltung, bei der die Düsenaustrittsöffnungen nicht in einer Ebene liegen. In diesem Beispiel ist die zentrale Düse 5, die hier zusammen mit einer Brennstoffzuführung 10 dargestellt ist, relativ der umgebenden Düsenöffnung 6 stromab ausgeführt. Durch eine derartige Ausgestaltung könnte der Punkt der Überlagerung der beiden Düsenstrahlen weiter in die Brennkammer hinein verlagert werden, um einen höheren Vermischungsgrad mit dem Rauchgas aufgrund der späteren Zündung zu erreichen.

Neben der Anordnung der äußeren Düsen 7 auf einer kreisförmigen Linie lassen sich auch mehrere Reihen von äusseren Düsen vorsehen. Dies ist beispielhaft in der Figur 14 dargestellt. Ebenso ist eine Anordnung mit mehr als ein oder zwei Düsenreihen möglich. Auch eine unregelmässige Anordnung der äußeren Düsen 7 kann in Betracht gezogen werden, um die Symmetrie des Systems zu stören und somit selbstinduzierte Pulsationen zu unterdrücken. Eine unregelmässige Wahl der Stöchiometrie der über die einzelnen äußeren Düsen 7 zugeführten Gemische, so dass einige magerer bzw. fetter sind als andere, kann ebenfalls in Erwägung gezogen werden.

<u>Bezugszeichenliste</u>

| | |
|---|---|
| 1 | Verdichter |
| 2 | Brennraum |
| 3 | Turbine |
| 4 | externe Rauchgas-Rückführung |
| 5 | zentrale erste Eintrittsdüse |
| 6 | konzentrische zweite Eintrittsdüse |
| 7 | äußere Eintrittsdüsen |
| 8 | Drallerzeuger |
| 9 | Distanzstück |
| 10 | Brennstoffzuführung |
| 11 | Strahlprofil |
| 21 | Brenner |
| 22 | Freistrahl, Brennfluid-Freistrahl |
| 23 | rezirkuliertes Rauchgas |
| R | Welle, Rotor |
| G | Generator |

**Patentansprüche**

1. Verfahren zum Verbrennen eines Brennstoffs, insbesondere in einer Brennkammer einer Gasturbogruppe, mit den folgenden Schritten:

- ein Brennstoff oder ein brennbares Gemisch wird als Brennfluid durch wenigstens eine Eintrittsdüse (5, 6, 7) als Brennfluid-Freistrahl (22) in einen Brennraum (2) eingebracht,
- dem Brennfluid-Freistrahl wird zur Verdünnung und Temperaturerhöhung rezirkuliertes Rauchgas (4, 23) aus dem Brennraum zugemischt,
- die Temperaturerhöhung wird so bemessen, dass das derart verdünnte Brennfluid auf eine Temperatur gebracht wird, welche zu einer Selbstentzündung des Brennfluides führt,
- die Strömung des Brennfluid-Freistrahls ist derart bemessen, dass wenigstens ein Teil des Rauchgases durch eine strahlinduzierte brennrauminterne Rezirkulation (23) in den Brennfluid-Freistrahl zugemischt wird,

**dadurch gekennzeichnet, dass** die Brennfluidzufuhr zu wenigstens einer Eintrittsdüse gepulst oder getaktet oder oszilliert wird, und damit wenigstens ein unstetiger Brennfluidstrahl erzeugt wird.

2. Verfahren nach Anspruch 1, **dadurch gekennzeichnet, dass** mehrere, nicht phasengleich pulsierende Strahlen in den Brennraum eingedüst werden

3. Verfahren nach Anspruch 1, **dadurch gekennzeichnet, dass** wenigstens der überwiegende Teil des dem Brennfluid beigemischten Rauchgases durch die strahlinduzierte brennrauminterne Rezirkulation dem Brennfluid-Freistrahl beigemischt wird.

4. Verfahren nach einem der vorstehenden Ansprüche, **dadurch gekennzeichnet, dass** im Wesentlichen das gesamte dem Brennfluid zugemischte Rauchgas durch die strahlinduzierte brennrauminterne Rezirkulation dem Brennfluid-Freistrahl zugemischt wird.

5. Verfahren nach einem der vorstehenden Ansprüche, **dadurch gekennzeichnet, dass** der Massenstrom des rezirkulierten Rauchgases wenigstens 100%, bevorzugt zwischen 100% und 150%, des Massenstroms in dem Freistrahl entspricht.

6. Verfahren nach einem der vorstehenden Ansprüche, **dadurch gekennzeichnet, dass** über wenigstens eine zentrale erste Eintrittsdüse (5) ein Brennfluid mit einer ersten Luftzahl eingebracht wird, und über wenigstens eine zweite Eintrittsdüse (6,7) ein Brennfluid mit einer zweiten Luftzahl eingebracht wird, wobei die zweite Luftzahl von der ersten Luftzahl verschieden ist.

7. Verfahren nach Anspruch 6, **dadurch gekennzeichnet, dass** die Luftzahlen während des Betriebes in Anhängigkeit von den Betriebsbedingungen, insbesondere der Brenner-Gesamtluftzahl oder dem Brennfluid-Gesamtmassenstrom, verändert werden.

8. Verfahren nach einem der Ansprüche 6 oder 7, wobei die Gesamtheit der aus der zentralen und den weiteren Düsen austretenden Fluidstrahlen eine gemittelte Luftzahl aufweist, **dadurch gekennzeichnet, dass** über die erste Eintrittsdüse ein vorgemischtes brennbares Gemisch eingebracht wird, dessen Luftzahl kleiner ist als die gemittelte Luftzahl und über wenigstens eine weitere Eintrittsdüse ein Oxidationsmittel, insbesondere Luft, oder Gemisch mit einer Luftzahl eingebracht wird, die grösser ist als die gemittelte Luftzahl.

9. Verfahren nach Anspruch 8, **dadurch gekennzeichnet, dass** über die erste Eintrittsdüse ein vorgemischtes brennstoffreiches brennbares Gemisch mit einer Luftzahl unter 1, insbesondere kleiner als 0,6 und bevorzugt kleiner als 0,3 eingebracht wird, und, dass über wenigstens eine weitere Eintrittsdüse ein Oxidationsmittel, insbesondere Luft, oder ein brennstoffarmes brennbares Gemisch mit einer Luftzahl grösser als 1, insbesondere grösser als 1,8 und bevorzugt grösser als 3, eingebracht wird.

10. Verfahren nach einem der Ansprüche 6 oder 7, wobei die Gesamtheit der aus der zentralen und den weiteren Düsen austretenden Fluidstrahlen eine gemittelte Luftzahl aufweist, **dadurch gekennzeichnet, dass** über die erste Eintrittsdüse ein Oxidationsmittel, insbesondere Luft, oder ein vorgemischtes Gemisch eingebracht wird, dessen Luftzahl grösser ist als die gemittelte Luftzahl, und über wenigstens eine weitere Eintrittsdüse ein brennbares Gemisch mit einer Luftzahl eingebracht wird, die kleiner ist als die gemittelte Luftzahl.

11. Verfahren nach Anspruch 10, **dadurch gekennzeichnet, dass** über die erste Eintrittsdüse ein Oxidationsmittel, insbesondere Luft, oder ein vorgemischtes brennstoffarmes brennbares Gemisch mit einer Luftzahl über 1, insbesondere grösser als 1,8 und bevorzugt grösser als 3 eingebracht wird, und dass über wenigstens eine weitere Eintrittsdüse ein brennstoffreiches brennbares Gemisch mit einer Luftzahl unter 1, insbesondere kleiner als 0,6 und bevorzugt kleiner als 0,3, eingebracht wird.

**12.** Verfahren nach einem der Ansprüche 6 oder 7, **dadurch gekennzeichnet, dass** über die erste Eintrittsdüse ein brennstoffarmes Gemisch mit einer Luftzahl über 1 eingebracht wird, und dass über wenigstens eine weitere Eintrittsdüse reines Oxidationsmittel oder ein nicht mehr brennbares extrem brennstoffarmes Gemisch eingebracht wird.

**13.** Verfahren nach einem der vorstehenden Ansprüche, **dadurch gekennzeichnet, dass** dem Brennfluid-Freistrahl in wenigstens einer Eintrittsdüse ein Drall, insbesondere mit einer Drallzahl unter 0,5 und bevorzugt mit einer Drallzahl unter 0,4, aufgeprägt wird.

**14.** Verfahren nach Anspruch 13, **dadurch gekennzeichnet, dass** den Brennfluid-Freistrahlen wenigstens zweier benachbart angeordneter Eintrittsdüsen gegensinniger Drall aufgeprägt wird.

**Claims**

**1.** Method for combustion of a fuel, in particular in a combustion chamber of a gas turbo group, comprising the following steps:

- a fuel or a combustible mixture is introduced into a combustion space (2) as combustible fluid through at least one entry nozzle (5, 6, 7) in the form of a combustible fluid open jet (22);
- recirculated flue gas (4, 23) from the combustion space is admixed to the combustible fluid open jet in order to dilute it and increase its temperature;
- the increase in temperature is such that the combustible fluid which has been diluted in this manner is brought to a temperature which leads to spontaneous ignition of the combustible fluid;
- the flow of the combustible fluid open jet is such that at least part of the flue gas is admixed into the combustible fluid open jet through jet-induced recirculation (23) internally within the combustion space,

**characterized in that** the combustible fluid feed to at least one entry nozzle is pulsed or cyclical or oscillating, and as a result at least one discontinuous combustible fluid jet is generated.

**2.** Method according to Claim 1, **characterized in that** a plurality of jets which are not pulsed in phase are injected into the combustion space.

**3.** Method according to Claim 1, **characterized in that** at least the majority of the flue gas which is admixed with the combustible fluid is admixed with the combustible fluid open jet through the jet-induced recirculation internally within the combustion space.

**4.** Method according to one of the preceding claims, **characterized in that** substantially all the flue gas which is admixed to the combustible fluid is admixed to the combustible fluid open jet through the jet-induced recirculation internally within the combustion space.

**5.** Method according to one of the preceding claims, **characterized in that** the mass flow of the recirculated flue gas corresponds to at least 100%, preferably between 100% and 150%, of the mass flow in the open jet.

**6.** Method according to one of the preceding claims, **characterized in that** a combustible fluid with a first air/fuel ratio is introduced via at least one central first entry nozzle (5), and a combustible fluid with a second air/fuel ratio is introduced via at least one second entry nozzle (6, 7), the second air/fuel ratio being different than the first air/fuel ratio.

**7.** Method according to Claim 6, **characterized in that** the air/fuel ratios are altered during operation as a function of the operating conditions, in particular the total burner air/fuel ratio or the total combustible fluid mass flow.

**8.** Method according to Claim 6 or 7, in which the combination of fluid jets emerging from the central and further nozzles has a mean air/fuel ratio, **characterized in that** a premixed combustible mixture whereof the air/fuel ratio is lower than the mean air/fuel ratio is introduced via the first entry nozzle, and an oxidizing agent, in particular air, or a mixture with an air/fuel ratio which is greater than the mean air/fuel ratio is introduced via at least one further entry nozzle.

**9.** Method according to Claim 8, **characterized in that** a premixed fuel-rich combustible mixture with an air/fuel ratio of lower than 1, in particular lower than 0.6 and preferably lower than 0.3, is introduced via the first entry nozzle, and **in that** an oxidizing agent, in particular air, or a low-fuel combustible mixture with an air/fuel ratio of greater than 1, in particular greater than 1.8 and preferably greater than 3, is introduced via at least one further entry nozzle.

10. Method according to Claim 6 or 7, in which the combination of fluid jets emerging from the central and further nozzles has a mean air/fuel ratio, **characterized in that** an oxidizing agent, in particular air, or a premixed mixture whereof the air/fuel ratio is greater than the mean air/fuel ratio is introduced via the first entry nozzle, and a combustible mixture with an air/fuel ratio which is lower than the mean air/fuel ratio is introduced via at least one further entry nozzle.

11. Method according to Claim 10, **characterized in that** an oxidizing agent, in particular air, or a premixed low-fuel combustible mixture with an air/fuel ratio of over 1, in particular greater than 1.8 and preferably greater than 3, is introduced via the first entry nozzle, and **in that** a fuel-rich combustible mixture with an air/fuel ratio of lower than 1, in particular less than 0.6 and preferably less than 0.3, is introduced via at least one further entry nozzle.

12. Method according to Claim 6 or 7, **characterized in that** a low-fuel mixture with an air/fuel ratio of over 1 is introduced via the first entry nozzle, and **in that** pure oxidizing agent or an extremely low-fuel mixture which is no longer combustible is introduced via at least one further entry nozzle.

13. Method according to one of the preceding claims, **characterized in that** a swirl, in particular with a swirl number of less than 0.5 and preferably with a swirl number of less than 0.4, is imparted to the combustible fluid open jet in at least one entry nozzle.

14. Method according to Claim 13, **characterized in that** an oppositely directed swirl is imparted to the combustible fluid open jets of at least two entry nozzles arranged adjacent to one another.

**Revendications**

1. Procédé de combustion d'un combustible, en particulier dans une chambre de combustion d'un turbo-groupe à gaz, comportant les étapes suivantes:

    - on introduit un combustible ou un mélange combustible comme fluide combustible dans une chambre de combustion (2) par au moins une buse d'entrée (5, 6, 7) sous la forme d'un jet libre de fluide combustible (22),
    - on mélange au jet libre de fluide combustible du gaz de fumée recyclé (4, 23) provenant de la chambre de combustion dans un but de dilution et d'augmentation de la température,
    - on fixe l'augmentation de température de telle manière que le fluide combustible ainsi dilué soit porté à une température, qui conduit à un allumage spontané du fluide combustible,
    - l'écoulement du jet libre de fluide combustible est fixé de telle manière qu'au moins une partie du gaz de fumée soit mélangée au jet libre de fluide combustible par une recirculation (23) induite par le jet à l'intérieur de la chambre de combustion,

    **caractérisé en ce que** l'ajout de fluide combustible à au moins une buse d'entrée est pulsé ou cadencé ou mis en oscillation, et **en ce que** l'on produit ainsi au moins un jet de fluide combustible irrégulier.

2. Procédé selon la revendication 1, **caractérisé en ce que** l'on injecte dans la chambre de combustion plusieurs jets pulsés de manière déphasée.

3. Procédé selon la revendication 1, **caractérisé en ce que** l'on mélangé au moins la partie principale du gaz de fumée mélange au fluide combustible par la recirculation induite par le jet à l'intérieur de la chambre de combustion.

4. Procédé selon l'une quelconque des revendications précédentes, **caractérisé en ce que** l'on mélange essentiellement la totalité du gaz de fumée mélangé au fluide combustible au jet libre de fluide combustible par la recirculation induite par le jet à l'intérieur de la chambre de combustion.

5. Procédé selon l'une quelconque des revendications précédentes, **caractérisé en ce que** le flux massique du gaz de fumée recyclé correspond au moins à 100 %, de préférence entre 100 % et 150 %, du flux massique dans le jet libre.

6. Procédé selon l'une quelconque des revendications précédentes, **caractérisé en ce que** l'on introduit un fluide combustible avec un premier excès d'air par au moins une première buse d'entrée centrale (5) et on introduit un fluide combustible avec un deuxième excès d'air par au moins une deuxième buse d'entrée (6, 7), dans lequel le deuxième excès d'air est différent du premier excès d'air.

7. Procédé selon la revendication 6, **caractérisé en ce que** l'on fait varier les excès d'air pendant le fonctionnement en fonction des conditions de fonctionnement, en particulier de l'excès d'air total du brûleur ou du flux massique total du fluide combustible.

8. Procédé selon l'une des revendications 6 ou 7, dans lequel la totalité des jets de fluide sortant de la buse centrale et des autres buses présente un excès d'air moyen, **caractérisé en ce que** l'on introduit par la première buse d'entrée un mélange combustible pré-mélangé, dont l'excès d'air est inférieur à l'excès d'air moyen, et on introduit par au moins une autre buse d'entrée un agent d'oxydation, en particulier de l'air, ou un mélange avec un excès d'air, qui est supérieur à l'excès d'air moyen.

9. Procédé selon la revendication 8, **caractérisé en ce que** l'on introduit par la première buse d'entrée un mélange combustible riche en combustible, pré-mélangé, avec un excès d'air inférieur à 1, en particulier inférieur à 0,6 et de préférence inférieur à 0,3, et **en ce que** l'on introduit par au moins une autre buse d'entrée un agent d'oxydation, en particulier de l'air, ou un mélange combustible pauvre en combustible avec un excès d'air supérieur à 1, en particulier supérieur à 1,8 et de préférence supérieur à 3.

10. Procédé selon l'une des revendications 6 ou 7, dans lequel la totalité des jets de fluide sortant de la buse centrale et des autres buses présente un excès d'air moyen, **caractérisé en ce que** l'on introduit par la première buse d'entrée un agent d'oxydation, en particulier de l'air, ou un mélange pré-mélangé dont l'excès d'air est supérieur à l'excès d'air moyen, et on introduit par au moins une autre buse d'entrée un mélange combustible avec un excès d'air qui est inférieur à l'excès d'air moyen.

11. Procédé selon la revendication 10, **caractérisé en ce que** l'on introduit par la première buse d'entrée un agent d'oxydation, en particulier de l'air, ou un mélange combustible pauvre en combustible pré-mélangé avec un excès d'air supérieur à 1, en particulier supérieur à 1,8 8 et de préférence supérieur à 3, et **en ce que** l'on introduit par au moins une autre buse d'entrée un mélange combustible riche en combustible avec un excès d'air inférieur à 1, en particulier inférieur à 0,6 et de préférence inférieur à 0,3.

12. Procédé selon l'une des revendications 6 ou 7, **caractérisé en ce que** l'on introduit par la première buse d'entrée un mélange pauvre en combustible avec un excès d'air supérieur à 1, et **en ce que** l'on introduit par au moins une autre buse d'entrée un agent d'oxydation pur ou un mélange extrêmement pauvre en combustible et qui n'est plus combustible.

13. Procédé selon l'une quelconque des revendications précédentes, **caractérisé en ce que** l'on imprime au jet libre de fluide combustible dans au moins une buse d'entrée un mouvement de rotation, en particulier avec un indice de rotation inférieur à 0,5 et de préférence avec un indice de rotation inférieur à 0,4.

14. Procédé selon la revendication 13, **caractérisé en ce que** l'on imprime aux jets libres de fluide combustible d'au moins deux buses d'entrée disposées à proximité l'une de l'autre un mouvement de rotation de sens contraire.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

**FIG. 15**

**FIG. 16**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0463218 A

- EP 0698764 A

**In der Beschreibung aufgeführte Nicht-Patentliteratur**

- Flammenlose Oxidation von Brennstoff mit hochvorgewärmter Luft. *Chemical Ingenieur Tech.,* 1991, vol. 63 (12), 1243-1245

- Flameless Oxidation to Reduce Thermal NO-Formation. *Prog. Energy Combust. Sci.,* 1997, 23